# EUROPÄISCHE PATENTANMELDUNG

(11) **EP 4 541 722 A1**
(43) Veröffentlichungstag der Anmeldung: **23.04.2025**
(21) Anmeldenummer: 24198326.1
(22) Anmeldetag: 04.09.2024
(51) Int. Cl.: B65B 27/12, B65B 13/20

(54) **VORRICHTUNG ZUM PRESSEN UND UMSCHNÜREN VON WERTSTOFFBALLEN UND VERFAHREN ZUM UMSCHNÜREN VON WERTSTOFFBALLEN MIT EINER DERARTIGEN VORRICHTUNG**

(30) Priorität: 16.10.2023 DE 102023128236
(71) Anmelder: Avermann Maschinenfabrik GmbH & Co.KG, 49078 Osnabrück (DE)
(72) Erfinder: Sendallar, Bülent, 49205 Hasbergen (DE)
(74) Vertreter: Dr. Binder & Binder GbR

(57) **Zusammenfassung**

Es wird eine Vorrichtung (1) zum Pressen und Umschnüren von Wertstoffballen (2) mit Schnürmitteln (3) vorgestellt, die zum Pressen der Wertstoffballen einen Presskanal (4) und einen translatorisch in dem Presskanal (4) bewegbar gelagerten Presskolben (5) umfasst, der zum Umschnüren der gepressten Wertstoffballen (2) an seiner ballenseitigen Stirnseite für die Führung jeweils eines, je ein Schnürmittel (3) transportierenden, vertikal bewegbaren Schnürwerkzeuges (6) je einen hierfür ausgeführten Kanal aufweist, wobei jedes Schnürmittel (3) unterhalb des Presskanals (4) um mindestens ein Umlenkmittel (7) und über die Führungskontur (8) je eines Führungselementes (9) geführt ist.

Die erfindungsgemäße Lösung besteht darin, dass die Vorrichtung (1) mindestens einen entlang einer Linearführung oder um eine Rotationsachse (10) drehbar gelagerten Schwenkarm (11) aufweist, der sich im Normalbetrieb der Vorrichtung (1) in einer Führungsposition befindet, in der die durch je ein Rohr (12) oder einen Schlitz zugeführten Schnürmittel (3) an dem mindestens einen, der Führungskontur (8) des Führungselementes (9) zugeordneten Umlenkmittel (7) und über die Führungskontur (8) des Führungselementes (9) gleitend entlang geführt sind, wobei jeder Schwenkarm (11) schnürmittelseitig eine Greifvorrichtung (13) zur automatisierten Fixierung eines freien Endes eines abgerissenen Schnürmittels (3) aufweist.

Ferner wird ein Verfahren zum Umschnüren von Wertstoffballen (2) mit einer derartigen Vorrichtung beschrieben.

## Beschreibung

Die Erfindung betrifft eine Vorrichtung zum Pressen und Umschnüren von Wertstoffballen und ein Verfahren zum Umschnüren von Wertstoffballen mit einer derartigen Vorrichtung.

Eine Vorrichtung zum Pressen und Umschnüren von Wertstoffballen mit Schnürmitteln ist bereits aus der EP 1 254 840 B1 bekannt, die einen Presskanal und einen translatorisch in dem Presskanal bewegbar gelagerten Presskolben umfasst. Bei den zu verarbeitenden Werkstoffen kann es sich um sehr unterschiedliche Materialien handeln. So können die Wertstoffballen beispielsweise aus Abfallmaterialien, Altpapier, aber auch aus Metallen oder Mischwerkstoffen bestehen, die unter dem hohen Pressdruck des Presskolbens innerhalb des Presskanals verdichtet werden. Der Presskolben weist zum Umschnüren der gepressten Wertstoffballen an seiner ballenseitigen Stirnseite für die Führung jeweils eines, je ein Schnürmittel transportierenden, vertikal beziehungsweise bei einigen Ausführungen auch oder zusätzlich horizontal bewegbaren Schnürwerkzeuges je einen hierfür ausgeführten Kanal auf. Mit diesen Kanälen im Presskolben fluchten Wandöffnungen des Presskanals, durch die das Schnürwerkzeug in einer definierten Pressstellung des Presskolbens zum Anlegen von Umschnürungen aus dem Schnürmittel um den vom Presskolben in der Pressstellung gehaltenen Wertstoffballen hindurchführbar ist. Somit kann das Schnürmittel jeweils mit einer hinter dem Wertstoffballen durch den Presskolben hindurch geführten Schnürmittelschleife verschlossen werden. Das in der Regel von je einer Vorratsrolle zur Verfügung gestellte Schnürmittel wird über wenigstens ein Umlenkmittel geführt. Als Umlenkmittel werden bei der bekannten Ausführung drehbar gelagerte Rollen zum Einsatz gebracht.

Zur Führung der Schnürmittel ist es beispielsweise aus der EP 3 333 089 B1 auch bekannt, die Schnürmittel durch Nuten zu führen, während die DE 25 40 452 A1 eine Führung in Rillen vorsieht. Als Umlenkmittel sind derzeit insbesondere Rollen im Einsatz. Eine derartige Lösung geht beispielhaft aus der DE 10 2020 121 898 A1 hervor.

Die einzelnen Bauelemente derartiger Vorrichtungen und auch das zum Einsatz kommende Schnürmittel unterliegen einer erheblichen Belastung, die durch Verunreinigungen und die erheblichen Drücke bei der Verarbeitung der Wertstoffe zu Wertstoffballen entstehen. In der Praxis ist deshalb immer wieder zu beobachten, dass einzelne Schnürmittelstränge reißen und dadurch der Wertstoffballen nicht ordnungsgemäß umwickelt werden kann. Aus der EP 1 683 408 B1 geht eine Lösung zum Erkennen derartiger Abrisse des Schnürmittels hervor, wobei hier mittels eines Gewichtspaktes an den Schnürmitteln und einer Fadenbremse eine Spannung auf das Schnürmittel aufgebracht wird. Ein in der Druckschrift als "Bruchsensor" bezeichneter Näherungssensor erfasst dabei einen Abriss eines Schnürmittels, in dem er das Herabfallen des Gewichtspaketes registriert. Die Vorrichtung muss bei einem Abriss des Schnürmittels jedoch immer angehalten werden, sodass der Verarbeitungsprozess gestoppt wird, um manuell das defekte Schnürmittel durch ein neues zu ersetzen. Diese Tätigkeit ist für den Anwender nicht nur unangenehm und aufwendig, sie birgt auch erhebliche Verletzungsrisiken in sich, da die Schnürmittel innerhalb beziehungsweise unterhalb des Maschinenbetts geführt werden.

Der Erfindung liegt die Aufgabe zugrunde, bei einer Vorrichtung zum Pressen und Umschnüren von Wertstoffballen ein abgerissenes Schnürmittel weitestgehend automatisch zu ersetzen. Ferner ist ein Verfahren anzugeben, wie der Ersatz des Schnürmittels mit einer derartigen Vorrichtung durchgeführt werden kann.

Die Erfindung löst diese Aufgabenstellung mit den Merkmalen der unabhängigen Patentansprüche 1 und 12. Weitere Ausgestaltungen der Erfindung sind Gegenstand der sich jeweils anschließenden Unteransprüche.

Eine Vorrichtung zum Pressen und Umschnüren von Wertstoffballen mit Schnürmitteln, wobei die Vorrichtung zum Pressen der Wertstoffballen einen Presskanal und einen translatorisch in dem Presskanal bewegbar gelagerten Presskolben umfasst, der zum Umschnüren der gepressten Wertstoffballen an seiner ballenseitigen Stirnseite für die Führung jeweils eines, je ein Schnürmittel transportierenden, vertikal bewegbaren Schnürwerkzeuges je einen hierfür ausgeführten Kanal aufweist, wobei jedes Schnürmittel unterhalb des Presskanals um mindestens ein Umlenkmittel und über die Führungskontur je eines Führungselementes geführt ist, wurde erfindungsgemäß dahingehend weitergebildet, dass die Vorrichtung mindestens einen entlang einer Linearführung oder um eine Rotationsachse drehbar gelagerten Schwenkarm aufweist, der sich im Normalbetrieb der Vorrichtung in einer Führungsposition befindet, in der die durch je ein Rohr oder einen Schlitz zugeführten Schnürmittel an dem mindestens einen, der Führungskontur des Führungselementes zugeordneten Umlenkmittel und auf der Oberfläche des zugehörigen Führungselementes gleitend entlang geführt sind, wobei jeder Schwenkarm schnürmittelseitig eine Greifvorrichtung zur automatisierten Fixierung eines freien Endes eines abgerissenen Schnürmittels aufweist.

Die erfindungsgemäße Besonderheit ist vorliegend darin zu sehen, dass beim Abriss eines Schnürmittels jede der vorhandenen Greifvorrichtungen das über das Rohr oder den Schlitz zugeführte Ersatz-Schnürmittel automatisch erfasst und in eine Position überführt, die eine Fortsetzung des Umschnürens der Wertstoffballen mit Schnürmitteln ermöglicht. Die Unterbrechung der fortwährenden Herstellung der Werkstoffballen kann auf diese Weise auf ein Minimum begrenzt werden, da das dem abgerissenen Schnürmittel folgende Schnürmittelende unmittelbar von der Greifvorrichtung erfasst wird und somit für die Weiterverarbeitung zur Verfügung steht. Der gesamte Vorgang ist damit weitgehend automatisiert und erspart daher einen aufwändigen und arbeitszeitintensiven, manuellen Ersatz des abgerissenen Schnürmittels.

Entsprechend einer ersten Ausgestaltung der Erfindung wird vorgeschlagen, dass mehrere, synchron bewegte Schwenkarme eine entlang der Linearführung oder um eine gemeinsame Achse schwenkbare Schwenkeinheit bilden. Mit anderen Worten wird nicht nur ein einzelner Schwenkarm bewegt, sondern zeitgleich sämtliche Schwenkarme, wenn eines der vorhandenen Schnürmittel gerissen ist. Die Schwenkarme sind dabei bevorzugt um eine gemeinsame Rotationsachse drehbar gelagert. Durch die Bildung einer Schwenkeinheit kann folglich die Steuerung der gesamten Vorrichtung vereinfacht werden, weil nicht jeder der Schwenkarme separat angesteuert werden muss. Daraus resultiert auch ein reduzierter Aufwand für die erforderliche Mechanik und Hydraulik, sodass dadurch eine sehr wesentliche Verbesserung bekannter Vorrichtungen zum Pressen und Umschnüren von Wertstoffballen gegeben ist.

Gemäß einer sehr vorteilhaften Weiterbildung der Erfindung weist die Greifvorrichtung eines jeden Schwenkarmes eine um eine Achse schwenkbar gelagerte Klemmbacke auf, deren Klemmfläche durch Aktivierung der Greifvorrichtung mittels eines ausfahrbaren Kolbens einer Kolben-Zylindereinheit oder eines Elektromagneten an der der Führungskontur zur Führung des Schnürmittels gegenüberliegenden, eine Andruckfläche bildenden Unterseite des Führungselements druckbeaufschlagt anliegt. Folglich besteht die Greifvorrichtung eines jeden Schwenkarmes aus einer Kolben-Zylindereinheit, der Klemmbacke mit der daran ausgebildeten Klemmfläche und dem Führungselement mit der zu der Klemmfläche korrespondierenden Andruckfläche, die an der Unterseite des Führungselements ausgebildet ist. Die Greifvorrichtung bildet damit eine Art Zangenkontur, die in der Lage ist, ein freies Ende eines Schnürmittels zu erfassen und zu fixieren.

Dabei ist es von besonderer Bedeutung, dass bei Abriss eines Schnürmittels die Schwenkeinheit von ihrer ursprünglichen Führungsposition in eine Spannposition überführt wird, in der die Schwenkarme eine Position einnehmen, in der die intakten Schnürmittel unter einer Vorspannung weiterhin über die Oberfläche der Führungselemente geführt sind und das über das Rohr oder den Schlitz nachgeführte Schnürmittel zwischen der Andruckfläche an der Unterseite des Führungselements und der Klemmfläche der Klemmbacke eingeklemmt wird. Auf diese Weise kann der Normalbetrieb der nicht abgerissenen Schnürmittel fortgesetzt werden beziehungsweise erhalten bleiben, während das neu zugeführte Schnürmittel von der Greifvorrichtung erfasst und durch eine Klemmung fixiert ist.

Im Anschluss an die zuvor beschriebene Fixierung des Ersatz-Schnürmittels wird das durch die Greifvorrichtung fixierte Ende des neu über das Rohr oder den Schlitz zugeführten Schnürmittels mittels des Schwenkarmes aus der Spannposition zurück in die Führungsposition überführt und zunächst in der Führungsposition gehalten. In diesem Zustand überspannt das Schnürmittel einen Freiraum, sodass das Schnürwerkzeug in der Lage ist, das Schnürmittel zu erfassen und einer Verknotungseinrichtung oder einer Verdrilleinrichtung zuzuführen, wo es verknotet oder verdrillt wird, sodass im Anschluss hieran der Normalbetrieb der Vorrichtung unmittelbar fortgesetzt werden kann.

Für die Ausbildung der Greifvorrichtung ist es von besonderer Bedeutung, dass die Unterseite des Führungselements eine zu der Klemmfläche der Klemmbacke komplementäre Andruckfläche aufweist. Dies hat zur Folge, dass zwischen der Andruckfläche an der Unterseite des Führungselements und der Klemmfläche der Klemmbacke ein das Schnürmittel aufnehmender Formschluss gegeben ist. Durch den Formschluss kann das Schnürmittel optimal und zuverlässig fixiert werden.

Erfindungsgemäße Vorrichtungen zum Pressen und Umschnüren von Wertstoffballen werden, wie dies eingangs bereits ausgeführt wurde, beispielsweise für die Herstellung von Wertstoffballen aus Abfällen zum Einsatz gebracht. Dies hat zur Folge, dass im Bereich des Presskanals und unterhalb des Maschinenbettes erhebliche Verunreinigungen durch herabfallende Reste der Wertstoffe oder durch entweichende Feuchtigkeit entstehen können, sodass eine sehr vorteilhafte Ausgestaltung der Erfindung darin zu sehen ist, dass die Schwenkarme durch ein Schutzblech vor Verunreinigungen geschützt sind. Das Schutzblech kann dabei in besonders bevorzugter Weise einteilig ausgeführt sein und so die gesamte Schwenkeinheit schützen. Selbstverständlich ist es auch im Sinne der Erfindung, dass jeder einzelne Schwenkarm durch je ein Schutzblech vor den Verunreinigungen geschützt ist.

Um die Zuführung des Schnürmittels zu erleichtern, welches das abgerissene Schnürmittel ersetzt, ist es von Vorteil, wenn am Ausgang des das Schnürmittel zuführenden Rohres oder Schlitzes eine Leiteinrichtung zur Zuführung des Schnürmittels angeordnet ist. Die Leiteinrichtung sollte sich dabei in einer besonders bevorzugten Ausführungsvariante in Richtung der Schwenkarme konisch verjüngen oder allgemein ausgedrückt einen sich verjüngenden Verlauf aufweisen. Somit kann das zugeführte Schnürmittel gezielt in den Bereich der Greifvorrichtung geführt werden, was die Dauer für den Ersatz des Schnürmittels wesentlich reduziert und das Erfassen des Schnürmittels durch die Greifvorrichtung erleichtert.

Das erfindungsgemäße Verfahren zum Umschnüren von Wertstoffballen mit einer zuvor beschriebenen Vorrichtung ist dadurch gekennzeichnet, dass die im Normalbetrieb der Vorrichtung in einer Führungsposition stehenden Schwenkarme der Schwenkeinheit bei einem Abriss mindestens eines Schnürmittels synchron von der Führungsposition in die Spannposition überführt werden, in der die unbeschädigten Schnürmittel unter einer Vorspannung weiterhin über die Oberfläche des Führungselements geführt sind, während das nachgeführte Ersatz-Schnürmittel in der Spannposition durch Aktivierung der Greifvorrichtung zwischen der Andruckfläche an der Unterseite des Führungselements und der Klemmfläche der Klemmbacke erfasst und eingeklemmt wird und durch eine anschließende Rückstellbewegung der Schwenkeinheit in die Führungsposition dieses Schnürmittel einen Freiraum überspannt, sodass das Schnürwerkzeug durch eine vertikale Hubbewegung das ersetzte Schnürmittel erfasst und einer Verknotung oder Verdrillung zuführt.

Durch das erfindungsgemäße Verfahren kann mit einer nur geringen Unterbrechung oder im laufenden Betrieb der Vorrichtung ein abgerissene Schnürmittel problemlos und fast vollständig automatisch ersetzt werden. Dadurch ergibt sich eine erhebliche Reduzierung der Ausfallzeiten und eine Vermeidung fehlerhafter Wertstoffballen. Aufwändige Sensorik oder Mechanik ist hierfür nicht erforderlich. Die Vorrichtung zum Pressen und Umschnüren von Wertstoffballen gestaltet sich durch das erfindungsgemäße Verfahren sehr einfach und damit auch kostengünstig.

Durch das Erfassen des neu zugeführten Schnürmittels als Ersatz des abgerissenen Schnürmittels entsteht ein Rest, der gemäß einer weiterbildenden Maßnahme des Verfahrens im Anschluss an die Verknotung oder Verdrillung abgetrennt wird, sodass anschließend der Normalbetrieb der Vorrichtung weitergeführt werden kann.

Die Erfindung wird nachfolgend anhand der beigefügten Zeichnungen näher erläutert. Das gezeigte Ausführungsbeispiel stellt dabei keine Einschränkung auf die dargestellte Variante dar, sondern dient lediglich der Erläuterung eines Prinzips der Erfindung.

Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: eine Prinzipdarstellung einer Vorrichtung zum Pressen und Umschnüren von Wertstoffballen,
- Figur 2:: einen Blick auf die Unterseite des Maschinenbetts einer Vorrichtung entsprechend der Darstellung in Blickrichtung des Pfeils II in Figur 1,
- Figur 3:: die Führung eines intakten Schnürmittels im Normalbetrieb der Vorrichtung ohne ein gerissenes Schnürmittel,
- Figur 4:: die Führung eines intakten Schnürmittels, während ein nicht dargestelltes Schnürmittel abgerissen ist,

- Figur 5:: die Position eines Schwenkarmes bei einem abgerissenen Schnürmittel mit geöffneter Greifvorrichtung,
- Figur 6:: die Position eines Schwenkarmes bei einem abgerissenen Schnürmittel bei geschlossener Greifvorrichtung,
- Figur 7:: die Rückführung des Schwenkarmes in die Führungsposition,
- Figur 8:: der vom Schnürmittel überspannte Freiraum mit heruntergefahrenem Schnürwerkzeug,
- Figur 9:: die Bewegung des Schnürwerkzeugs zum Verknoten oder Verdrillen des Schnürmittels und
- Figur 10:: die Freigabe des Schnürmittels durch die Greifvorrichtung zur weiteren Verarbeitung der Wertstoffballen.

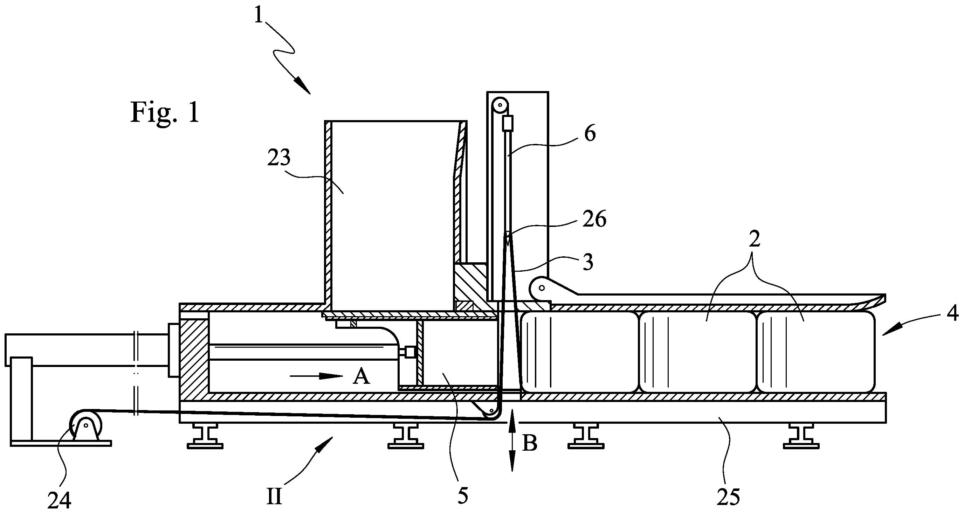

Zunächst veranschaulicht die Figur 1 ganz allgemein eine Prinzipdarstellung einer bekannten Vorrichtung 1 zum Pressen und Umschnüren von Wertstoffballen 2 mit einem Schnürmittel 3, in der die Besonderheit der Erfindung nicht im Detail erkennbar ist. Derartige Vorrichtungen 1 weisen einen Presskanal 4 auf, in dem in Längsrichtung, also translatorisch, ein Presskolben 5 bewegbar geführt ist. Der Presskolben 5 wird durch eine geeignete Hydraulikvorrichtung angetrieben und erzeugt einen Pressdruck, der die über den Füllschacht 23 dem Presskanal 4 zugeführten Wertstoffe verdichtet und in Richtung des Pfeils A bewegt. Die gesamte Vorrichtung 1 weist ein Maschinenbett 25 auf, das über eine geeignete Tragstruktur auf dem Untergrund gelagert ist. Zum Umschnüren der gepressten Wertstoffballen 2 weist der Presskolben 5 an seiner ballenseitigen Stirnseite für die Führung jeweils eines, je ein Schnürmittel 3 transportierenden, vertikal bewegbaren Schnürwerkzeuges 6 je einen hierfür ausgeführten Kanal auf, wobei jedes Schnürmittel 3 unterhalb des Presskanals 4 um mindestens ein Umlenkmittel 7 und über die Führungskontur 8 je eines Führungselementes 9 geführt ist. Das von einer Vorratsrolle 24 zugeführte Schnürmittel 3 wird von einem an dem Schnürwerkzeug 6 vorhandenen Widerhaken 26 erfasst und durch eine Vertikalbewegung in Richtung des Pfeils B einer Verknotung oder Verdrillung zugeführt.

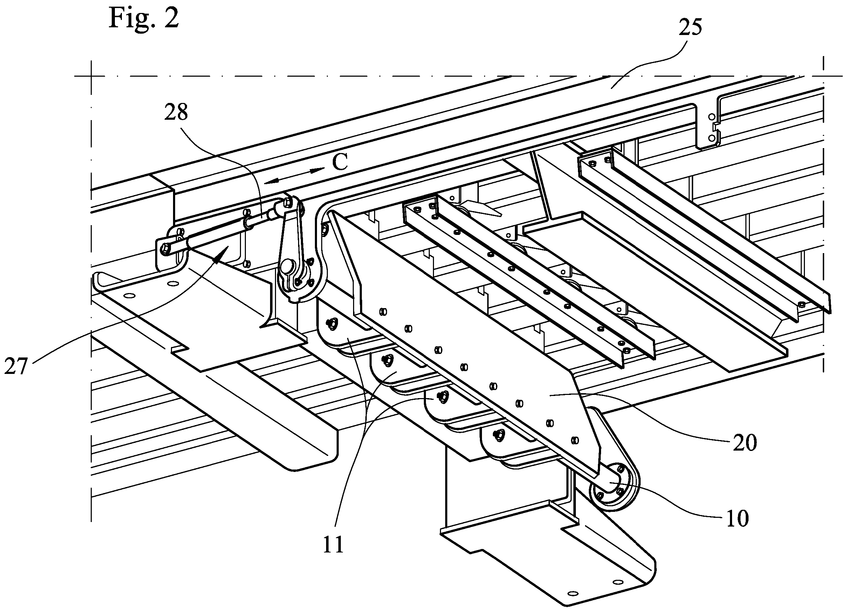

Ausgehend von dem in der Figur 1 dargestellten, prinzipiellen Aufbau einer Vorrichtung 1 zum Pressen und Umschnüren von Wertstoffballen 2, wie sie an sich bekannt ist, erlaubt die Figur 2 einen Blick in Richtung des Pfeils II aus Figur 1 auf die Unterseite des Maschinenbettes 25 einer erfindungsgemäßen Vorrichtung 1. Hieraus wird bereits eine Besonderheit ersichtlich, die vorliegend darin besteht, dass mehrere, koaxial, also auf einer gemeinsamen Rotationsachse 10 angeordnete Schwenkarme 11 durch eine gemeinsame Hydraulikeinheit 27 mit einem Kolben 28 um die Rotationsachse 10 drehbar und schwenkbar gelagert sind. Der Kolben 28 der Hydraulikeinheit 27 wird zur Bewegung der Schwenkarme 11 in Richtung des Doppelpfeils C hin- und herbewegt. Zum Schutz der Lagerungen sowie der Hydraulikeinheit 27 weist die aus den Schwenkarmen 11 gebildete Schwenkeinheit ein Schutzblech 20 auf.

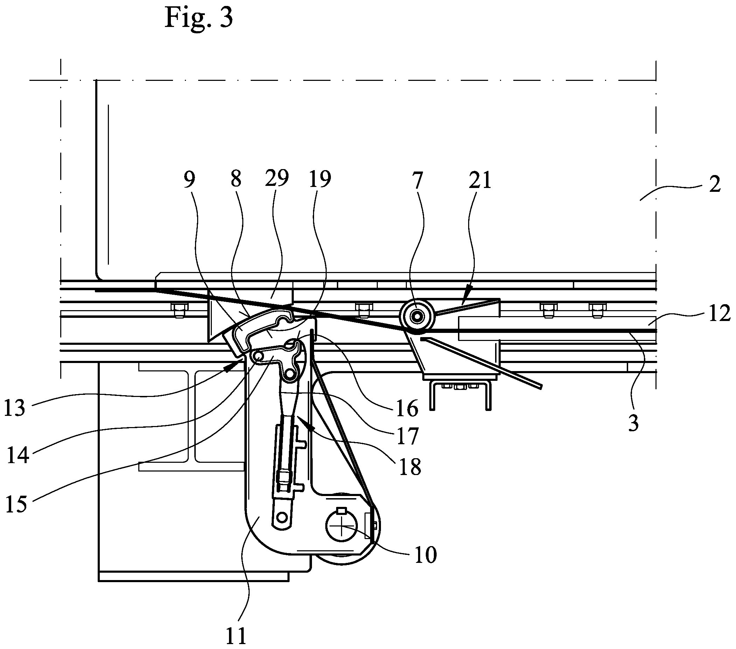

Aus der Figur 3 geht zur Veranschaulichung des Normalbetriebs der Vorrichtung 1 die Führung eines intakten Schnürmittels 3, also ohne ein gerissenes Schnürmittel 3, hervor. Dargestellt ist dabei einer der vorhandenen Schwenkarme 11 der Schwenkeinheit in einer Seitenansicht. Die Besonderheit besteht erfindungsgemäß darin, dass der um die Rotationsachse 10 drehbar gelagerte Schwenkarm 11 eine Greifvorrichtung 13 aufweist, die vorliegend aus einer Kolben-Zylindereinheit 18 mit einem ausfahrbaren Kolben 17 besteht, der an einer Klemmbacke 15 angreift und diese durch seine Bewegung um eine Achse 14 bewegt. Die Klemmbacke 15 wird folglich durch das Ausfahren oder Einfahren des Kolbens 17 der Kolben-Zylindereinheit 18 um die Achse 14 verschwenkt. Die Klemmbacke 15 weist ferner eine Klemmfläche 16 auf. Der Klemmfläche 16 der Klemmbacke 15 gegenüberliegend ist an dem Schwenkarm 11 ein Führungselement 9 vorhanden, dessen Oberseite eine Führungskontur 8 bildet, auf der das Schnürmittel 3 gleitend entlanggeführt ist. In der in Figur 3 dargestellten Führungsposition des Schwenkarmes 11 gleitet das Schnürmittel 3 folglich entlang der Führungskontur 8 und ist zusätzlich an mindestens einem Umlenkmittel 7 vorbeigeführt, wobei hier bevorzugt mehrere Umlenkmittel 7 zum Einsatz kommen können, um beispielsweise eine Spannung des Schnürmittels 3 zu erreichen. Die Führungskontur 8 des Führungselements 9 liegt darüber hinaus in der in Figur 3 dargestellten Führungsposition des Schwenkarmes 11 mit einem überwiegenden Teil der Führungskontur 8 an einem korrespondierenden Widerlager 29 der Vorrichtung 1 an. Das Widerlager 29 ist vorliegend ein ortsfester Bestandteil der Vorrichtung 1. Auf der der Führungskontur 8 gegenüberliegenden Unterseite des Führungselements 9 ist an dem Führungselement 9 ferner eine Andruckfläche 19 ausgebildet, die eine Geometrie aufweist, die komplementär zu der korrespondierenden Klemmfläche 16 der Klemmbacke 15 ausgeführt ist. Somit ist zwischen der Klemmfläche 16 der Klemmbacke 15 und der korrespondierenden Andruckfläche 19 des Führungselements 9 ein Formschluss gegeben, sodass die Elemente der Greifvorrichtung 13 ineinandergreifen können. Das von einer Vorratsrolle 24 zugeführte Schnürmittel 3 wird bei der Ausführungsvariante in Figur 3 über ein Rohr 12 zugeführt. Bei einem Abriss des Schnürmittels 3 ist es erforderlich, ein Ersatz-Schnürmittel 3 über das Rohr 12 zuzuführen, weshalb es von erheblichem Vorteil ist, im Übergangsbereich zwischen dem Ende des Rohres 12 und dem ersten Umlenkmittel 7 eine Leiteinrichtung 21 vorzusehen, deren konischer oder sich verjüngender Verlauf das Schnürmittel 3 unmittelbar auf die Oberfläche des Umlenkmittels 7 führt.

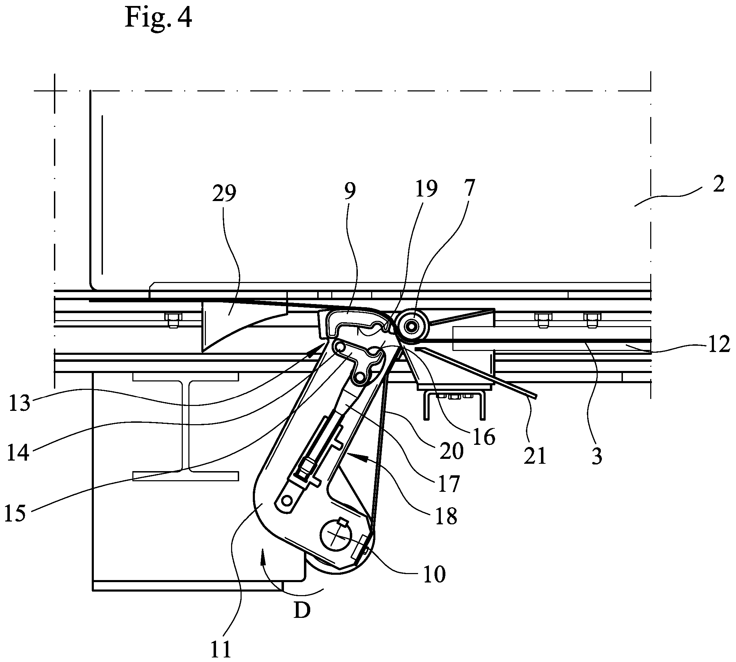

In der Figur 4 ist nochmals die Führung eines intakten Schnürmittels 3 dargestellt, wobei hier die Besonderheit darin besteht, dass ein nicht dargestelltes, weiteres Schnürmittel 3, bereits abgerissen ist. Die Darstellung dient lediglich dem Verständnis des Aufbaus der Vorrichtung 1, da die nicht abgerissenen Schnürmittel 3 im Falle eines einzelnen, abgerissenen Schnürmittels 3 unter einer Vorspannung des Schwenkarmes 11 stehen, der hierzu, wie dies aus der Figur 4 hervorgeht, von seiner Führungsposition in Richtung des Pfeils D in eine Spannposition verschwenkt wurde, um die genannte Vorspannung auf die intakten Schnürmittel 3 auszuüben. Die Greifvorrichtung 13 ist in dieser Spannposition des Schwenkarmes 11 und bei dem intakten Schnürmittel 3 geöffnet, also nicht aktiviert.

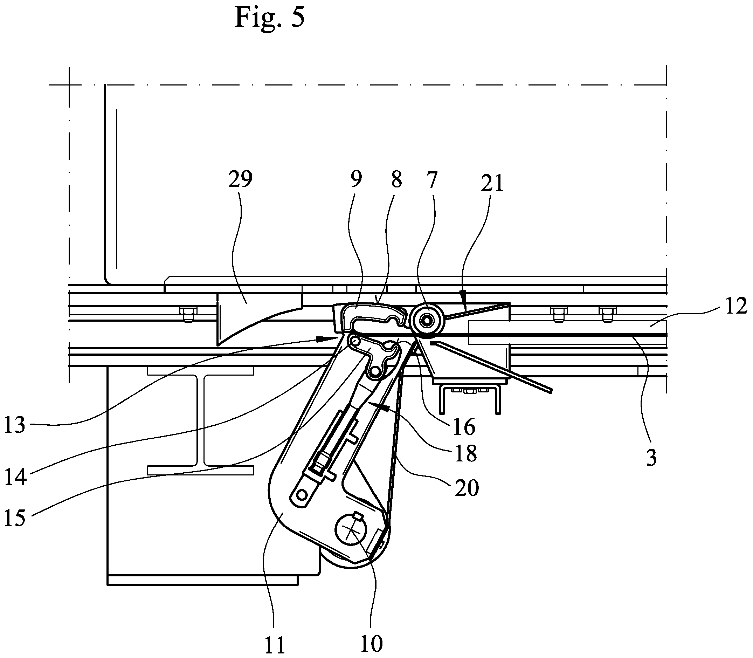

Aus den Darstellungen der Figuren 5-10 geht hervor, wie die erfindungsgemäße Greifvorrichtung 13 funktioniert, wenn ein Schnürmittel 3 abgerissen ist. So zeigt die Figur 5 zunächst den Schwenkarm 11 immer noch in der zuvor bereits beschriebenen Spannposition. Allerdings handelt es sich bei der Darstellung in Figur 5 um den Schwenkarm 11, bei dem das Schnürmittel 3 abgerissen ist. Über das Rohr 12 wird dabei ein Ersatz-Schnürmittel 3 zugeführt, dessen freies Ende in einem ersten Schritt bereits über die Leiteinrichtung 21 und das Umlenkmittel 7 in den Zwischenraum der Greifvorrichtung 13, also zwischen die Klemmbacke 15 und die Andruckfläche 19 des Führungselements 9, eingeführt worden ist. Die Greifvorrichtung 13 ist in diesem Zustand noch geöffnet, das heißt, zwischen der Klemmbacke 15 und dem zugeordneten Führungselement 9 ist ein Freiraum vorhanden.

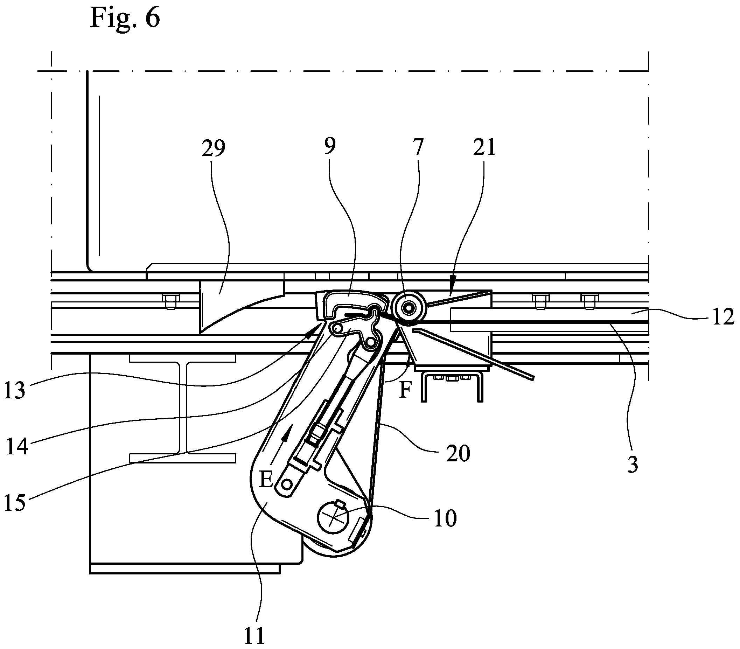

Ein weiterer Schritt des Ersatzes des abgerissenen Schnürmittels 3 wird in der Darstellung der Figur 6 veranschaulicht. Die Figur 6 zeigt die Spannposition eines Schwenkarmes 11 bei einem abgerissenen Schnürmittel 3 und bei geschlossener Greifvorrichtung 13, was bedeutet, dass die Greifvorrichtung 13 in diesem Schritt aktiviert wurde und somit der Kolben 17 der Kolben-Zylindereinheit 18 in Richtung des Pfeils E bewegt, also ausgefahren wurde, sodass die Klemmbacke 15 der Greifvorrichtung 13 in Richtung des Pfeils F um die Achse 14 verschwenkt wurde. Dies hat zur Folge, dass die Klemmfläche 16 der Klemmbacke 15 an der korrespondierenden Andruckfläche 19 des Führungselements 9 zur Anlage kommt, wobei zwischen der Andruckfläche 19 und der Klemmfläche 16 das zugeführte Ende des Schnürmittels 3 eingeklemmt und damit fixiert ist.

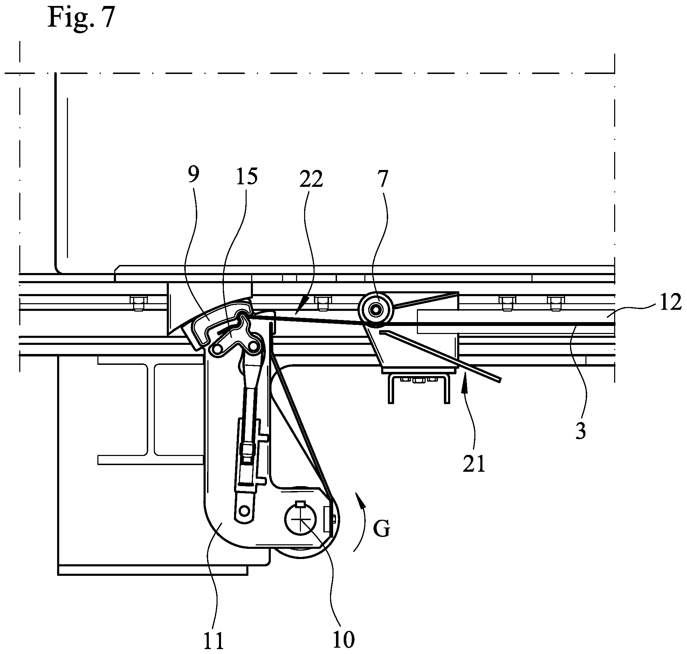

Wie im nächsten Schritt aus der Figur 7 ersichtlich wird, erfolgt im Anschluss die Rückführung des Schwenkarmes 11 in seine Führungsposition, wobei durch diese Bewegung des Schwenkarmes 11 in Richtung des Pfeils G das in der Greifvorrichtung 13 eingeklemmte Ende des Schnürmittels 3 mitgenommen wird, sodass es einen Freiraum 22 zwischen dem Umlenkmittel 7 und der nunmehr eingenommenen Führungsposition des Schwenkarmes 11 überspannt.

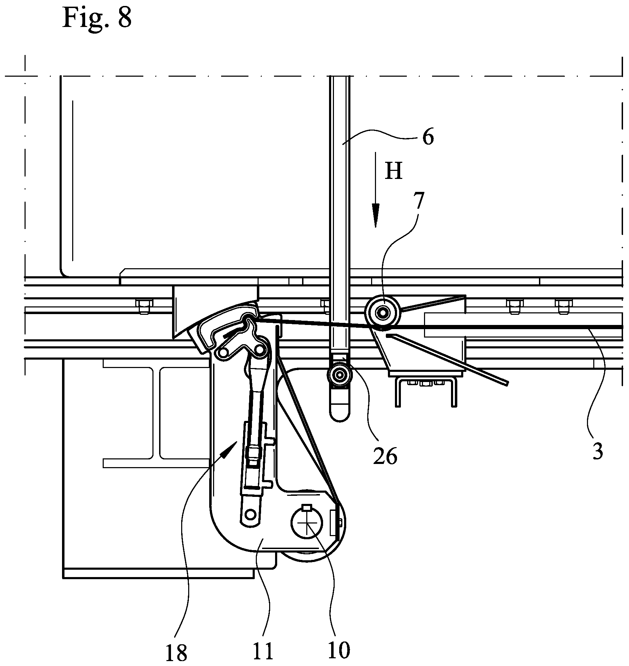

In einem darauffolgenden Schritt, der in der Figur 8 dargestellt ist, wird ein Schnürwerkzeug 6, bei dem es sich um eine sogenannte Schnürnadel handelt, vertikal in Richtung des Pfeils H nach unten bewegt, sodass der an dem Schnürwerkzeug 6 vorhandene Widerhaken 26 sich unterhalb des Schnürmittels 3 befindet, während die Greifvorrichtung 13 das freie Ende des Schnürmittel 3 in der Führungsposition des Schwenkarmes 11 immer noch fixiert.

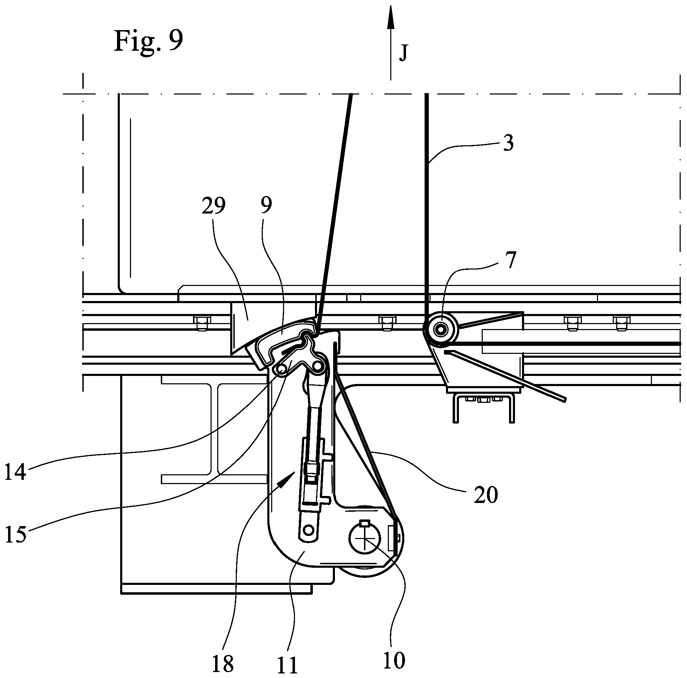

Wie dies anschaulich aus der Darstellung der Figur 9 hervorgeht, wird das Schnürwerkzeug 6 im Anschluss hieran in Richtung des Pfeils J vertikal nach oben bewegt, sodass mittels des an dem Schnürwerkzeug 6 vorhandenen Widerhakens 26 das Schnürmittel 3 in einer Schlaufe mitgenommen wird und auf diese Weise zum Verknoten oder Verdrillen des Schnürmittels 3 einer geeigneten Verknotungs- oder Verdrilleinrichtung zugeführt wird, die in der Figur 9 jedoch nicht dargestellt ist, da sie an sich bekannt ist.

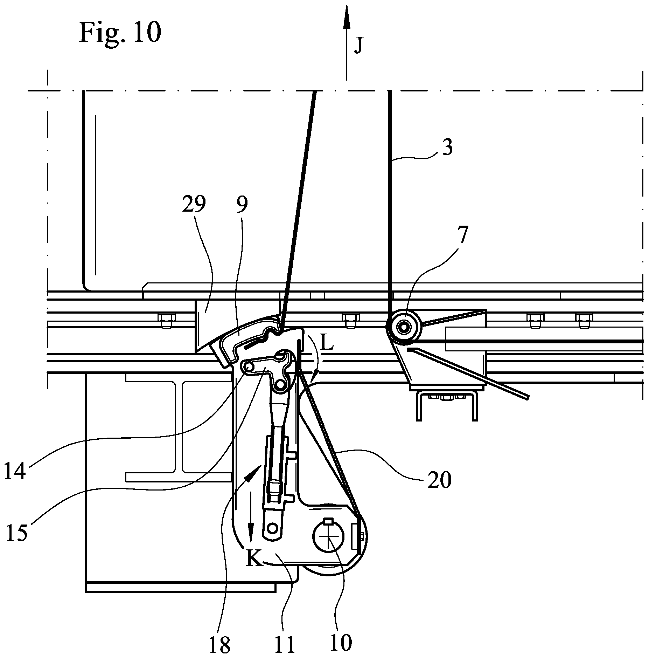

Schließlich zeigt die Figur 10 noch die Freigabe des Schnürmittels 3 durch die Greifvorrichtung 13 zur weiteren Verarbeitung der Wertstoffballen 2 und zur Fortsetzung des Verfahrens zum Umschnüren der Wertstoffballen 2. Dabei wurde zuvor der Kolben 17 der Kolben-Zylindereinheit 18 in Richtung des Pfeils K bewegt, sodass die Klemmbacke 15 der Greifvorrichtung 13 um die Achse 14 in Richtung des Pfeils L verschwenkt wurde, was zum Lösen der Greifvorrichtung 13 und damit zur Freigabe des Endes des Schnürmittel 3 führt. Das verbleibende Reststück des Schnürmittel 3 wird letztendlich abgetrennt und entsorgt.

### BEZUGSZEICHENLISTE:

- 1: Vorrichtung zum Pressen und Umschnüren von Wertstoffballen
- 2: Wertstoffballen
- 3: Schnürmittel
- 4: Presskanal
- 5: Presskolben
- 6: Schnürwerkzeug
- 7: Umlenkmittel
- 8: Führungskontur
- 9: Führungselement
- 10: Rotationsachse
- 11: Schwenkarm
- 12: Rohr oder Schlitz
- 13: Greifvorrichtung
- 14: Achse
- 15: Klemmbacke
- 16: Klemmfläche
- 17: Kolben
- 18: Kolben-Zylindereinheit
- 19: Andruckfläche
- 20: Schutzblech
- 21: Leiteinrichtung
- 22: Freiraum
- 23: Füllschacht
- 24: Vorratsrolle
- 25: Maschinenbett
- 26: Widerhaken
- 27: Hydraulikeinheit
- 28: Kolben
- 29: Widerlager

## Patentansprüche

1. Vorrichtung (1) zum Pressen und Umschnüren von Wertstoffballen (2) mit Schnürmitteln (3), wobei die Vorrichtung (1) zum Pressen der Wertstoffballen einen Presskanal (4) und einen translatorisch in dem Presskanal (4) bewegbar gelagerten Presskolben (5) umfasst, der zum Umschnüren der gepressten Wertstoffballen (2) an seiner ballenseitigen Stirnseite für die Führung jeweils eines, je ein Schnürmittel (3) transportierenden, vertikal bewegbaren Schnürwerkzeuges (6) je einen hierfür ausgeführten Kanal aufweist, wobei jedes Schnürmittel (3) unterhalb des Presskanals (4) um mindestens ein Umlenkmittel (7) und über die Führungskontur (8) je eines Führungselementes (9) geführt ist,
**dadurch gekennzeichnet, dass**
die Vorrichtung (1) mindestens einen entlang einer Linearführung bewegbaren oder um eine Rotationsachse (10) drehbar gelagerten Schwenkarm (11) aufweist, der sich im Normalbetrieb der Vorrichtung (1) in einer Führungsposition befindet, in der die durch je ein Rohr (12) oder einen Schlitz zugeführten Schnürmittel (3) an dem mindestens einen, der Führungskontur (8) des Führungselementes (9) zugeordneten Umlenkmittel (7) und über die Führungskontur (8) des Führungselementes (9) gleitend entlang geführt sind, wobei jeder Schwenkarm (11) schnürmittelseitig eine Greifvorrichtung (13) zur automatisierten Fixierung eines freien Endes eines abgerissenen Schnürmittels (3) aufweist.

2. Vorrichtung nach Anspruch 1,
**dadurch gekennzeichnet, dass**
mehrere, synchron bewegte Schwenkarme (11) eine entlang der Linearführung oder um eine gemeinsame Achse (10) schwenkbare Schwenkeinheit bilden.

3. Vorrichtung nach einem der vorstehend genannten Ansprüche,
**dadurch gekennzeichnet, dass**
die Greifvorrichtung (13) eines jeden Schwenkarmes (11) eine um eine Achse (14) schwenkbar gelagerte Klemmbacke (15) aufweist, deren Klemmfläche (16) durch Aktivierung der Greifvorrichtung (13) mittels eines ausfahrbaren Kolbens (17) einer Kolben-Zylindereinheit (18) oder eines Elektromagneten an der der Führungskontur (8) zur Führung des Schnürmittels (3) gegenüberliegenden, eine Andruckfläche (19) bildenden Unterseite des Führungselements (9) druckbeaufschlagt anliegt.

4. Vorrichtung nach Anspruch 3,
**dadurch gekennzeichnet, dass**
bei Abriss eines Schnürmittels (3) die Schwenkeinheit von der Führungsposition in eine Spannposition überführt wird, bei der die Schwenkarme (11) eine Position einnehmen, in der die intakten Schnürmittel (3) unter einer Vorspannung über die Führungskontur (8) der Führungselemente (9) geführt sind und das nachgeführte Ersatz-Schnürmittel (13) zwischen der Andruckfläche (19) an der Unterseite des Führungselements (9) und der Klemmfläche (16) der Klemmbacke (15) eingeklemmt ist.

5. Vorrichtung nach Anspruch 4,
**dadurch gekennzeichnet, dass**
das durch die Greifvorrichtung (13) fixierte Ende des über das Rohr (12) oder den Schlitz zugeführten Schnürmittels (3) mittels des Schwenkarmes (11) aus der Spannposition zurück in die Führungsposition überführt und in der Führungsposition mittels des Schnürwerkzeugs (6) erfassbar ist.

6. Vorrichtung nach Anspruch 5,
**dadurch gekennzeichnet, dass**
das vom Schnürwerkzeug (6) erfasste Ende des Schnürmittels (3) durch eine Drill- oder Knoteinrichtung verdrillbar oder verknotbar ist.

7. Vorrichtung nach einem der Ansprüche 3 bis 6,
**dadurch gekennzeichnet, dass**
die Andruckfläche (19) an der Unterseite des Führungselements (9) eine zu der Klemmfläche (16) der Klemmbacke (15) komplementäre Kontur aufweist.

8. Vorrichtung nach einem der Ansprüche 3 bis 7,
**dadurch gekennzeichnet, dass**
zwischen der Andruckfläche (19) an der Unterseite des Führungselements (9) und der Klemmfläche (16) der Klemmbacke (15) ein das Schnürmittel (3) aufnehmender Formschluss gegeben ist.

9. Vorrichtung nach einem der vorstehend genannten Ansprüche,
**dadurch gekennzeichnet, dass**
die Schwenkarme (11) durch ein Schutzblech (20) vor Verunreinigungen geschützt sind.

10. Vorrichtung nach einem der vorstehend genannten Ansprüche,
**dadurch gekennzeichnet, dass**
am Ausgang des das Schnürmittel (3) zuführenden Rohres (12) oder Schlitzes eine Leiteinrichtung (21) zur Zuführung des Schnürmittels (3) zur Erneuerung des abgerissenen Schnürmittels (3) zwischen die Klemmbacke (15) und das Führungselement (9) angeordnet ist.

11. Vorrichtung nach Anspruch 10,
**dadurch gekennzeichnet, dass**
die Leiteinrichtung (21) einen in Richtung der Schwenkarme (11) konischen oder sich verjüngenden Verlauf aufweist.

12. Verfahren zum Umschnüren von Wertstoffballen (2) mit einer Vorrichtung (1) nach einem der vorstehend genannten Ansprüche,
**dadurch gekennzeichnet, dass**
- die im Normalbetrieb der Vorrichtung (1) in einer Führungsposition stehenden Schwenkarme (11) der Schwenkeinheit bei einem Abriss mindestens eines Schnürmittels (3) synchron von der Führungsposition in die Spannposition überführt werden, in der die unbeschädigten Schnürmittel (3) unter einer Vorspannung weiterhin über die Führungskontur (8) der Führungselemente (9) geführt sind, während das nachgeführte Ersatz-Schnürmittel (3) in der Spannposition durch Aktivierung der Greifvorrichtung (13) zwischen der Andruckfläche (19) an der Unterseite des Führungselements (9) und der Klemmfläche (16) der Klemmbacke (15) erfasst und eingeklemmt wird,
- durch eine anschließende Rückstellbewegung der Schwenkeinheit in die Führungsposition das Schnürmittel (3) einen Freiraum (22) überspannt, sodass das Schnürwerkzeug (6) durch eine vertikale Hubbewegung das ersetzte Schnürmittel (3) erfasst und dieses einer Vernotung oder Verdrillung zuführt.

13. Verfahren nach Anspruch 12,
**dadurch gekennzeichnet, dass**
im Anschluss an die Verknotung oder Verdrillung der überstehende Rest des Schnürmittels (3) abgetrennt und der Normalbetrieb der Vorrichtung (1) weitergeführt wird.
